# EUROPÄISCHE PATENTSCHRIFT

(11) **EP 1 230 277 B1**
(45) Veröffentlichungstag und Bekanntmachung des Hinweises auf die Patenterteilung: **08.02.2006**
(21) Anmeldenummer: 00958474.9
(22) Anmeldetag: 19.08.2000
(51) Int. Cl.: C08F 8/22, C08J 7/12

(54) **REAGENZ FÜR DIE FLUORIERUNG VON KUNSTSTOFFEN**
REAGENT FOR FLUORINATING PLASTICS
REACTIF POUR FLUORER DES MATIERES PLASTIQUES

(30) Priorität: 01.09.1999 DE 19941544
(43) Veröffentlichungstag der Anmeldung: 14.08.2002
(73) Patentinhaber: Air Liquide Deutschland GmbH, 40235 Düsseldorf (DE)
(72) Erfinder: BONN VAN, Rolf, D-47269 Duisburg (DE); ESCHWEY, Manfred, D-69493 Hirschberg (DE)
(74) Vertreter: Kahlhöfer, Hermann
(86) Internationale Anmeldenummer: PCT/EP2000/008109
(87) Internationale Veröffentlichungsnummer: WO 2001/016188

(56) Entgegenhaltungen:
- EP-A- 0 339 413
- EP-A- 0 489 197
- DE-A- 2 401 948
- DE-A- 2 412 025
- DE-A- 3 415 381
- DE-A- 19 505 188
- US-A- 4 142 032
- US-A- 4 144 374
- US-A- 5 149 744
- DATABASE WPI Section Ch, Week 9004 Derwent Publications Ltd., London, GB; Class A18, AN 1984-003268 XP002155511 & JP 58 199132 A (NIPPON MEKTRON KK), 19. November 1983 (1983-11-19)

## Beschreibung

Die vorliegende Erfindung betrifft ein Verfahren zur Oberflächenfluorierung von Kunststoffen.

Verfahren zur Gasphasenfluorierung von Kunststoffoberflächen werden beispielsweise in EP 0 196 468 B1 (interne Bezeichnung MG 1506), DE-PS 2 401 948 und DE-PS 2 644 508 beschrieben.

Die Herstellung eines Kraftstoffvorratsbehälters aus einem polymeren Stoff mit einer fluorhaltigen Schicht wird in der DE 195 05 188 A1 beschrieben. Es werden thermoplastisch verarbeitbare Kunststoffe wie Polyester, Polyether, Polyetherketone, Polyamide, Polystyrole oder Polyolefine mit Hilfe von Fluorgasgemischen mit einem inerten Verdünnungsgas fluoriert.

Eine direkte Fluorinierung von Polymer-Material mit einer Mischung von Kohlendioxid und Fluor ist aus der EP 0 489 197 A1 bekannt. Dabei wird Kohlendioxid als Trägerfluid und Fluor als Reaktant eingesetzt. Als Polymere werden Polyolefine, insbesondere Polyethylen, erwähnt.

Moderne Tanksysteme für Kraftfahrzeuge (Kfz) bestehen heute aus einer Reihe von komplexen Komponenten wie Pumpen, Füllstandsgeber, Entlüftungsleitungen mit Aktivkohlebehältern, Roll-over Ventilen usw, die mit dem eigentlichen Tank aus Polyethylen hoher Dichte (HDPE) eine Einheit bilden. In Europa werden mehr als 80 % aller neu zugelassenen Kraftfahrzeuge mit solchen Kunststoff-kraftstoffsystemen ausgerüstet. Neben HDPE werden insbesonders für Anbauteile folgende Polymerwerkstoffe eingesetzt: Polypropylen (PP), Polyamide (PA), diverse Fluorpolymere und Polyoxymethylen (POM), um nur einige zu nennen.

Grundlegendes Problem der mengenmäßig bedeutendsten Werkstoffgruppe (HDPE; High Density Polyethylene) für Tanksysteme ist, wie bereits seit langem bekannt, die Permeation flüchtiger organischer Verbindungen (VOC = Volatile Organic Compounds) durch die Tankwandung. Es gibt hierfür eine Reihe von Verfahren zum Sperrschichtaufbau, mit dem Ziel die Permeationsverluste wirkungsvoll zu reduzieren, wie z. B. Fluorierung (In- oder Off-Line) oder die Coextrusion. Die Permeationsverluste eines unbehandelten Tanks können damit von ca. 20 g/d auf Werte unter 0,2 g/d gesenkt werden (g/d: Gramm pro Tag; gemessen bei 40°C).

Betrachtet man allerdings das Gesamtsystem (inklusive Pumpen, Verbindungstechnik Schlauch, Aktivkohlebehälter und Roll-over Ventile), so muß man einen deutlich höheren Grenzwert für die VOC-Emissionen in Kauf nehmen. Er beträgt das vierfache des Permeationsverlustes eines Tanks ohne Anbauteile (in folgenden "Blase" genannt). Der Grund ist einerseits darin zu sehen, daß die Blase nach der Fluorierung spanabhebend oder durch Schweißen nachbearbeitet werden muß, um die Anbauteile anzubringen. Hierdurch werden Teile der Sperrschicht zerstört und die Permeationsrate steigt bzw. es muß ein größerer Sicherheitsfaktor einkalkuliert werden.

Aufgabe der Erfindung ist, die Herstellung von Tanksystemen zu verbessern.

Gelöst wurde die Aufgabe durch ein Verfahren mit den in Anspruch 1 beschriebenen Merkmalen.

Es wurde gefunden, daß bei der Gasphasenfluorierung mit einem CO₂-haltigen Fluorierungsreagenz, Teile aus einem Materialmix der Werkstoffgruppen PE (z. B. HDPE), POM und PA, auch glasfaserverstärkt, den Angriff von Fluor und Fluorwasserstoff ohne wesentliche Form- und Farbveränderungen überstanden.

Das Fluorierungsreagenz ist vorzugsweise ein Gasgemisch zur Erzeugung fluorierter Oberflächen von Kunststoffen, insbesondere Polyolefinen, Polyacetal und/oder Polyamid sowie glasfaserverstärkten Kunststoffen, das die Gase Fluor und Kohlendioxid enthält.

Das Fluorierungsreagenz, insbesondere als Gasgemisch, ermöglicht die Fluorierung kompletter Tanksysteme, das heißt der Innenoberflächen in einem gesamten kraftstoffführenden System bei Kraftfahrzeugen, das in der Regel verschiedene Kunststoffe enthält.

Das Fluorierungsreagenz ist vorzugsweise ein Gasgemisch. Das Gasgemisch enthält in der Regel 1 bis 80 Vol.-% Kohlendioxid, vorzugsweise 5 bis 50 Vol.-% Kohlendioxid und besonders bevorzugt 5 bis 20 Vol.-% Kohlendioxid. Das Gasgemisch enthält in der Regel 1 bis 50 Vol.% Fluor, vorzugsweise 1 bis 15 Vol.-% Fluor und besonders bevorzugt 5 bis 10 Vol.-% Fluor. Das Gasgemisch enthält in der Regel neben Fluor und Kohlendioxid ein inertes Gas wie Stickstoff oder ein Edelgas, z. B. Helium oder Argon. Die Votumenanteile von Fluor, Kohlendioxid und inertem Gas ergeben in der Regel zusammen 100 Vol.-%.

Beispiele für das Fluorierungsreagenz sind in Tabelle 1 aufgeführt.

**Tabelle 1: Beispiele für kohlendioxidhaltige Gasgemische für die Fluorierung von Kunststoffoberflächen**

| Gasgemisch / Nr. | Fluor / Vol.-% | Kohlendioxid / Vol.-% | Stickstoff / Vol.-% |
|---|---|---|---|
| 1 | 10 | 10 | 80 |
| 2 | 10 | 5 | 85 |
| 3 | 10 | 20 | 70 |
| 4 | 5 | 5 | 90 |
| 5 | 5 | 20 | 75 |
| 6 | 10 | 30 | 60 |
| 7 | 10 | 40 | 50 |
| 8 | 10 | 1 | 89 |
| 9 | 5 | 1 | 94 |
| 10 | 10 | 50 | 40 |

Die Gasgemische werden vorzugsweise vorgefertigt und in Druckgasbehältern wie Druckgasflaschen gespeichert. Die Gasgemische können aber auch vorort bei der Durchführung der Fluorierung hergestellt werden. Beispielsweise werden Druckbehälter mit einem fluorhaltigen Gas (z. B. 10 Vol.-% Fluor in Stickstoff) und Druckbehälter mit reinem Kohlendioxid bereitgestellt und für die Fluorierung werden die Gase aus den Druckbehältern gemischt.

Das Verfahren wird zur sogenannten Off-line-Fluorierung von Kraftfahrzeug-Kraftstoffbehältern aus Kunststoff (z. B. HDPE) in kompletten Tanksystemen für Kraftfahrzeuge eingesetzt. Die kompletten Tanksysteme (Tank mit kraftstoffführenden Anschlußteilen) weisen Teile aus verschiedenen Kunststoffen (z. B. PE wie HDPE; PA; POM; glasfaserverstärkte Kunststoffe) auf.

Das Verfahren wird beispielsweise analog zu dem in EP 0 196 468 B1 (interne Bezeichnung MG 1506) beschriebenen Verfahren durchgeführt, worauf hiermit Bezug genommen wird.

Die Beimischung von CO₂ (Kohlendioxid) zu einem fluorhaltigen Gas zum Schutz von Kunststoffoberflächen, insbesondere Oberflächen mit Kunststoffen wie PE, POM und PA, deren Kombination oder von Oberflächen glasfaserverstärkter Kunststoffe, ermöglicht eine Oberflächenfluorierung von Materialien wie POM, PA und glasfaserverstärkten Polymeren.

### Beispiel

Vielzweckprobekörper nach DIN 53 737 aus den Materialien (PE, PP, POM, PA; glasfaserverstärkte Kunststoffe) wurden in einem Offline-Fluorierungsreaktor entsprechend der Tabelle 2 mit einem fluorhaltigen Behandlungsgas beaufschlagt.

Nach der Fluorierung wurden die Probekörper mit destilliertem Wasser gewaschen und bei 40 °C getrocknet. Der Gewichtsverlust der behandelten Probe ist ein Maß für den Abbaugrad des Polymers.

Wie zu erkennen ist fällt die gravimetrische Veränderung der Proben in Gegenwart von CO₂ am geringsten aus. Ebenso waren kaum visuelle Veränderungen festellbar, währenddessen die in Abwesenheit von CO₂ behandelten Teile zum Teil Verfärbungen erfuhren.

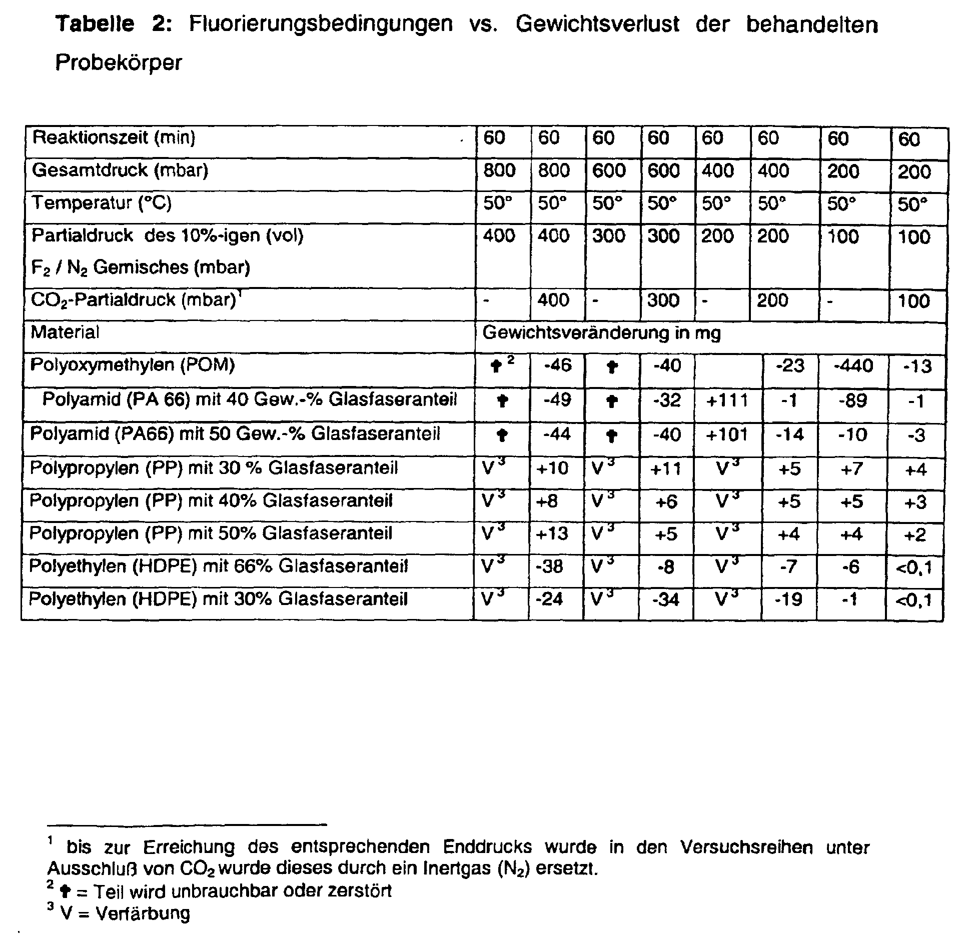

## Patentansprüche

1. Verfahren zur Oberflächenfluorierung von Kunststoffen, **dadurch gekennzeichnet, daß** die Oberflächen der Kunststoffe mit einem Fluorierungsreagenz, das die Gase Fluor und Kohlendioxid enthält, in Kontakt gebracht werden, die Oberfläche die innere Oberfläche eines kompletten Tanksystems für Kraftfahrzeuge aus einem Kunststoff-Kraftstoff-Behälter mit angeschlossenen Kunststoffanbauteilen ist, wobei das komplette Tanksystem Teile aus verschiedenen Kunststoffen aufweist, und die Oberfläche in einem Verfahrensschritt fluoriert wird.

2. Verfahren nach Anspruch 1, **dadurch gekennzeichnet, daß** die Kunststoffanbauteile Teile aus Polyacetal, Polyamid oder glasfaserverstärktem Kunststoff enthalten.

## Claims

1. Process for the surface fluorination of plastics, **characterized in that** the surfaces of the plastics are brought into contact with a fluorinating reagent comprising the gases fluorine and carbon dioxide, the surface is the inner surface of a complete tank system for major vehicles comprising a plastic fuel container with attached plastic attachments, with the complete tank system comprising parts of various plastics, and the surface is fluorinated in one process step.

2. Process according to Claim 1, **characterized in that** the plastic attachments comprise parts of polyacetal, polyamide or fibreglass-reinforced plastic.

## Revendications

1. Procédé de fluoration de surface de matières plastiques, **caractérisé en ce que** les surfaces des matières plastiques sont mises en contact avec un réactif fluorant qui contient les gaz fluor et dioxyde de carbone, la surface est la surface intérieure d'un système de réservoir complet pour véhicules automobiles constitué d'un réservoir de carburant en matière plastique avec des composants en matière plastique rapportés et raccordés, le système de réservoir complet présentant des pièces en différentes matières plastiques, et la surface étant fluorée dans une étape du procédé.

2. Procédé selon la revendication 1, **caractérisé en ce que** les composants en matière plastique rapportés contiennent des pièces en polyacétal, en polyamide ou en une matière plastique renforcée par des fibres de verre.
